# EUROPÄISCHE PATENTSCHRIFT

(11) **EP 2 687 115 B1**
(45) Veröffentlichungstag und Bekanntmachung des Hinweises auf die Patenterteilung: **04.03.2015**
(21) Anmeldenummer: 13175565.4
(22) Anmeldetag: 08.07.2013
(51) Int. Cl.: A42B 3/04, B60Q 1/26

(54) **Schutzhelm mit Leuchtelement**
Protective helmet with luminous element
Casque de protection avec élément d'éclairage

(30) Priorität: 19.07.2012 DE 102012212707
(43) Veröffentlichungstag der Anmeldung: 22.01.2014
(73) Patentinhaber: ALPINA SPORTS GmbH, 86316 Friedberg (DE)
(72) Erfinder: Sewering, Bernhard, 85221 Dachau (DE)
(74) Vertreter: Rau, Schneck & Hübner Patentanwälte Rechtsanwälte PartGmbB

(56) Entgegenhaltungen:
- WO-A1-2012/025463
- DE-U1-202009 000 140
- DE-U1-202010 016 237
- FR-A1- 2 798 721

## Beschreibung

Die Erfindung betrifft einen Schutzhelm mit mindestens einem lösbar eingesetzten Leuchtelement.

Ein solcher Schutzhelm mit einem lösbar in einer Öffnung einer Helmschale platzierten Rücklicht ist beispielsweise aus der WO 2012/025 463 A1 bekannt. Das Rücklicht ist an einer innerhalb der Öffnung vorgesehenen Halterungsvorrichtung angebracht, wobei die Halterungsvorrichtung zugleich eine rückwärtige Halterung für einen Gurt, der zur Befestigung des Schutzhelms an dem Kopf des Helmträgers dient, ausgebildet ist. Aufgrund dieser Doppelfunktion der Halterungsvorrichtung resultiert ein relativ komplizierter Aufbau.

Weiterhin ist in der EP 2 296 500 B1 ein Sturzhelm mit einer aufprallsicheren Beleuchtung beschrieben. Der Sturzhelm, bei dem es sich beispielsweise um einen Fahrradhelm, einen Skihelm oder einen anderen Sporthelm handeln kann, ist zur Befestigung einer Leuchte eine Traverse vorgesehen, die zwei einander gegenüberliegende Ränder einer Öffnung in der Helmschale überragt, auf der Außenfläche der Helmschale aufliegt und dort befestigt ist. Aufgrund der Traverse resultiert ein relativ komplizierter Aufbau. Außerdem ragt die an der Traverse befestigte Leuchte zumindest ein Stück weit aus der Öffnung hervor, wodurch zum einen der optische Gesamteindruck des Helms und zum anderen die gewünschte weitgehend glatte, d.h. ohne Vorstände ausgestaltete, Helmaußenfläche beeinträchtigt wird. Eine glatte Helmaußenfläche ermöglicht bei einem Sturz des Helmträgers ein widerstandsarmes und verhakungsfreies Gleiten auf der Helmaußenfläche, so dass Verletzungen vermieden werden. Aufgrund der teilweise aus der Öffnung vorstehenden Leuchte ist die Helmaußenfläche nicht vollständig glatt. Es bleibt ein Verletzungsrisiko.

Weiterhin ist in der DE 20 2010 016 237 U1 ein Schutzhelm für Sportzwecke mit einem an der Rückseite des Helms lösbar angeordneten Rücklicht beschrieben. Zur Befestigung des Rücklichts ist der Helm an der Rückseite in spezieller Weise ausgestaltet. Er weist eine gezielt zur Aufnahme des Rücklichts an der Außenkontur der Helmschale eingebrachte Vertiefung auf. In der Vertiefung ist ein T-förmiges Profil zur Halterung des eingesetzten Rücklichts vorgesehen. Ein bestehender Helm muss erst beträchtlich umkonstruiert werden, wenn er mit dieser spezielle Befestigungsmöglichkeit für ein Rücklicht ausgestattet werden soll. Dies ist aufwändig und verursacht Zusatzkosten.

In der US 2007/0000022 A1 wird ein Gurtbandbefestigungssystem für einen Sporthelm, insbesondere einen Radhelm, beschrieben. Dieser Helm umfasst eine mit Öffnungen versehene Helmschale. Innerhalb mancher der Öffnungen sind Gurtbandankergehäuse zur Befestigung des Gurtbands angeordnet. Die Öffnungen können einen sich nach innen verjüngenden Öffnungsquerschnitt haben, wodurch der Sitz der Gurtbandankergehäuse innerhalb der Öffnungen in Verbindung mit der durch das Gurtbandsystem ausgeübten Zugbelastung gewährleistet ist. Zusätzlich können die Gurtbandankergehäuse mittels Schnapphaken befestigt sein.

Die Aufgabe der Erfindung besteht deshalb darin, einen Schutzhelm der eingangs bezeichneten Art anzugeben, bei dem das Leuchtelement auf einfache und trotzdem sichere Weise befestigt werden kann.

Zur Lösung dieser Aufgabe wird ein Schutzhelm entsprechend den Merkmalen des Patentanspruchs 1 angegeben. Der erfindungsgemäße Schutzhelm ist ein solcher, bei dem eine Helmschale mit einer Helmaußenseite und einer Helminnenseite vorgesehen ist, und die Helmschale mindestens eine Öffnung aufweist, die die Helmschale vollständig durchdringt, und die eine Öffnungsinnenwand sowie einen Öffnungsquerschnitt hat, wobei der Öffnungsquerschnitt an der Helmaußenseite größer ist, als an der Helminnenseite, das Leuchtelement eine Leuchtenseitenwand sowie einen Leuchtenrückwand aufweist und von der Helmaußenseite aus in die Öffnung eingesetzt ist, wobei mindestens die Leuchtenseitenwand oder mindestens die Leuchtenrückwand mit der Öffnungsinnenwand in Kontakt steht, und ein sich an der Helminnenseite abstützender Leuchtenhaltemechanismus vorgesehen ist, der lösbar mit dem Leuchtelement verbunden ist und auf das Leuchtelement eine Zugkraft ausübt, so dass das Leuchtelement in die Öffnung hineingezogen wird. Weiterhin enthält der Leuchtenhaltemechanismus ein sich an der Helminnenseite abstützendes Halteelement und ein das Halteelement mit dem Leuchtelement verbindendes Verbindungselement, wobei das Halteelement steif und das Verbindungselement elastisch oder federnd ist. Das Verbindungselement ist als eine Schlaufe oder als eine Feder ausgebildet.

Bei dem erfindungsgemäßen Schutzhelm, bei dem es sich insbesondere um einen Sturzhelm und/oder um einen Sporthelm, wie insbesondere einen Fahrradhelm, einen Skihelm, einen Skaterhelm, einen Reithelm oder dgl., handeln kann, erfolgt die Befestigung des Leuchtelements auf besonders einfache Weise in der Öffnung der Helmschale mittels des Leuchtenhaltemechanismus. Aufgrund dessen Zugkraft wird das Leuchtelement insbesondere von der Helminnenseite aus in die Öffnung, d.h. insbesondere in den von der Öffnungsinnenwand umschlossenen Raum, der insofern einen Aufnahmeraum für das Leuchtelement bildet, hineingezogen und dort insbesondere auch in Position gehalten. Es liegt insbesondere eine Spannbefestigung des Leuchtelements an der Helmschale vor. Der im Wesentlichen senkrecht zur Richtung der Helmschalendicke orientierte Öffnungsquerschnitt verkleinert sich vorzugsweise nach innen hin und bewirkt eine einfache, aber doch sehr effiziente Lagerung bzw. Halterung des Leuchtelements mit seiner Leuchtenseitenwand und/oder seiner Leuchtenrückwand an der Öffnungsinnenwand. Zugleich ermöglicht es der sich in Richtung der Helmschalendicke vorzugsweise verändernde, insbesondere nach innen hin verkleinernde Öffnungsquerschnitt, das Leuchtelement an einer z.B. vorab bestimmbaren Position oder mit einer z.B. vorab bestimmbaren Einsatz- und Eindringtiefe innerhalb der Öffnung zu platzieren.

Bei dem Leuchtelement kann es sich beispielsweise um ein Licht, das insbesondere mittels mindestens einer Leuchtdiode (LED) oder auch einem anderen Leuchtmittel, wie beispielsweise einem konventionellen Glühbirnchen, realisiert ist, handeln. Das Leuchtelement umfasst vorzugsweise ein Gehäuse, in dem auch die elektrische Energieversorgung, z.B. eine Batterie oder ein Akku, untergebracht sein kann. Alternativ oder zusätzlich kann das Leuchtelement auch einen Lichtreflektor umfassen.

Die Helmschale des erfindungsgemäßen Schutzhelms kann vorzugsweise mehrteilig aufgebaut sein, beispielsweise aus einer harten Außenschale und einer demgegenüber weicheren stoßdämpfenden Innenschale z. B. aus einem EPS-Material. Die Außenschale ist dabei dünner als die Innenschale. Grundsätzlich kann aber auch ein anderer Aufbau der Helmschale vorgesehen sein, beispielsweise eine nur einteilige Helmschale oder eine Helmschale mit mehr als zwei Teilschalen. Bei jedem denkbaren Aufbau der Helmschale durchdringt die Öffnung, in die das Leuchtelement eingesetzt ist, die ein- oder mehrteilige Helmschale jeweils vollständig.

Das Leuchtelement befindet sich vorzugsweise praktisch vollständig innerhalb der Öffnung und ragt an der Helmaußenseite im Wesentlichen nicht über den Öffnungsrand hinaus, so dass Schutzhelm in diesem Helmbereich nach einem Sturz widerstandsarm auf einem Untergrund gleiten kann. Ein Verhaken von außen überstehenden Teilen ist so gut wie ausgeschlossen.

Der Leuchtenhaltemechanismus ist insbesondere nur bei abgesetztem Schutzhelm von der Helminnenseite aus zugänglich und kann insbesondere auch nur dann gelöst werden. Vorzugsweise ist kein von der Helmaußenseite ausgehender und ggf. zufälliger Zugriff auf den Leuchtenhaltemechanismus möglich. Dies erhöht die Sicherheit, da es zu keinem unbeabsichtigten Lösen des Leuchtelements aus der Öffnung kommen kann.

Der Aufbau des Leuchtenhaltemechanismus mit einem sich an der Innenseite abstützenden Halteelement und einem das Halteelement mit dem Leuchtelement verbindenden Verbindungselement ist sehr einfach und kostengünstig. Da das Halteelement zur Abstützung an der Helminnenseite vorgesehen ist, ist eine steife Ausgestaltung besonders vorteilhaft. Dann resultiert nämlich eine besonders gute Abstützwirkung. Bei der Ausbildung des Verbindungselements als eine Schlaufe oder als eine Feder handelt es sich um einfache und kostengünstige Komponenten, die sich aber trotzdem mit Vorteil zur Realisierung eines sehr effizienten Leuchtenhaltemechanismus einsetzen lassen.

Vorteilhafte Ausgestaltungen des erfindungsgemäßen Schutzhelms ergeben sich aus den Merkmalen der von Anspruch 1 abhängigen Ansprüche.

Gemäß einer günstigen Ausgestaltung weist die Öffnungsinnenwand mindestens einen Vorsprung auf, auf dem das Leuchtelement insbesondere mit seiner Leuchtenrückwand aufliegt. Damit kann auf sehr einfache Weise die Position definiert werden, an der das Leuchtelement innerhalb der Öffnung platziert ist. Außerdem bieten die Vorsprünge ein sehr effizientes Widerlager, das der von dem Leuchtenhaltemechanismus ausgeübten Zugkraft ohne Weiteres widerstehen kann.

Bei einer weiteren günstigen Ausgestaltung ist es vorgesehen, dass sich der Öffnungsquerschnitt zur Helminnenseite hin im Wesentlichen kontinuierlich verringert, und das Leuchtenelement insbesondere mit seiner Leuchtenseitenwand an der insbesondere vorsprungsfreien Öffnungsinnenwand anliegt. Bei dieser Ausgestaltung können insbesondere schräge Anlage- oder Kontaktflächen zwischen der Öffnung und dem Leuchtelement gebildet sein, wobei "schräg" hier in Bezug auf die Helmschalendickenrichtung zu verstehen ist. Dadurch kann es zu einer zusätzlichen Verklemmung des Leuchtelements innerhalb der Öffnung kommen, wodurch ein sehr guter Sitz und ein sehr guter Halt des Leuchtelements innerhalb der Öffnung gegeben sind. Trotzdem lässt sich das Leuchtelement aber einfach entfernen, nämlich z.B. indem man von der Helminnenseite aus nach einem zumindest teilweisen Entfernen des Leuchtenhaltemechanismus entgegen der Richtung der Zugkraftwirkung gegen die Leuchtenrückwand drückt.

Gemäß einer weiteren günstigen Ausgestaltung ist eine Kontur der Leuchtenseitenwand an eine Kontur der Öffnungsinnenwand angepasst. Insbesondere ist ein formschlüssiger Kontakt zwischen der Leuchtenseitenwand und der Öffnungsinnenwand gegeben. Dadurch lässt sich der Sitz des Leuchtenelements innerhalb der Öffnung weiter verbessern.

Gemäß einer weiteren günstigen Ausgestaltung hat das Leuchtenelement an der Leuchtenrückwand eine Haltespange zur Verbindung des Leuchtelements mit dem Leuchtenhaltemechanismus. Eine derartige Haltespange lässt sich einfach an der Leuchtenrückwand anbringen, beispielsweise einstückig mit einem Rückwandteil des Leuchtelements. Die Haltespange kann außer zur Verbindung mit dem Leuchtenhaltemechanismus auch anderweitig genutzt werden, beispielsweise in einem vom Schutzhelm getrennten Zustand zum Anklemmen des Leuchtelements an anderer Stelle, wie z.B. an einem Bekleidungsstück.

Gemäß einer anderen günstigen Ausgestaltung enthält der Leuchtenhaltemechanismus mindestens ein elastisches oder federndes Element. So lässt sich die Zugkraft, die das Leuchtelement in die Öffnung hineinzieht, in einfacher und doch sehr effizienter Weise realisieren.

Gemäß einer weiteren günstigen Ausgestaltung ist das Verbindungselement als mindestens ein Gummiring ausgebildet. Hierbei handelt es sich um eine einfache und kostengünstige Komponente, die sich aber trotzdem mit Vorteil zur Realisierung eines sehr effizienten Leuchtenhaltemechanismus einsetzen lässt.

Gemäß eine weiteren günstigen Ausgestaltung ist das Halteelement als ein Haltestift ausgebildet, dessen Länge größer ist als eine Öffnungsweite der Öffnung an der Helminnenseite. Dies gilt insbesondere für jede beliebige Öffnungsweite, unabhängig davon, wo und in welcher Richtung die betreffende Öffnungsweite an der Öffnung gemessen wird. Dadurch wird sichergestellt, dass sich der Haltestift in jeder beliebigen Position an dem Rand oder den Rändern der Öffnung an der Helminnenseite abstützt und es zu keinem unbeabsichtigten Lösen des Leuchtenhaltemechanismus kommt.

Gemäß einer weiteren günstigen Ausgestaltung verkleinert sich ein Querschnitt des Haltestifts in dessen Längsrichtung gesehen. Der Haltestift verjüngt sich also in seiner Längsrichtung. Dies erleichtert das Einbringen bzw. Einfädeln des Haltestifts in das Verbindungselement.

Gemäß einer weiteren günstigen Ausgestaltung weist der Haltestift in einem zentralen Abschnitt eine Verstärkung auf. Diese Verstärkung kann beispielsweise eine Vorwölbung in mindestens eine senkrecht zur Längsrichtung des Haltestifts orientierte Richtung sein. Aufgrund dieser Verstärkung hat das Verbindungselement (= z.B. ein Gummiring) eine größere Auflagefläche und somit einen besseren Halt. Außerdem ist die mechanische Belastung auf den Haltestift im zentralen Abschnitt am höchsten, so dass eine an dieser Stelle vorgesehene Verstärkung günstig ist. Weiterhin gewährleistet diese Verstärkung einen sehr guten Sitz des Verbindungselements am Haltestift.

Gemäß einer weiteren günstigen Ausgestaltung weist der Haltestift in einem zentralen Abschnitt mindestens eine Führung für das Verbindungselement auf. Die Führung kann insbesondere als eine Führungsnut ausgebildet sein. Dadurch lassen sich Fehlmontagen und/oder ein unbeabsichtigtes Lösen des Leuchtenhaltemechanismus vermeiden.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel eines Schutzhelms mit einem lösbar in eine Helmöffnung eingesetzten und mittels eines Leuchtenhaltemechanismus in der Helmöffnung gehaltenen Leuchtelement in einer Schnittdarstellung,
- Fig. 2: den Schutzhelm und das Leuchtelement gemäß Fig. 1 in einer perspektivischen Explosionsdarstellung,
- Fig. 3: das Leuchtelement gemäß Fig. 1 in einer Rückansicht,
- Fig. 4: das Leuchtelement in Verbindung mit dem Leuchtenhaltemechanismus gemäß Fig. 1 in einer Seitenansicht,
- Fig. 5 und 6: einen Haltestift des Leuchtenhaltemechanismus gemäß Fig. 1 und 4 in einer Draufsicht und einer perspektivischen Ansicht, und
- Fig. 7: ein weiteres Ausführungsbeispiel eines Schutzhelms mit einem lösbar in eine Helmöffnung eingesetzten und mittels eines Leuchtenhaltemechanismus in der Helmöffnung gehaltenen Leuchtelement in einer Schnittdarstellung.

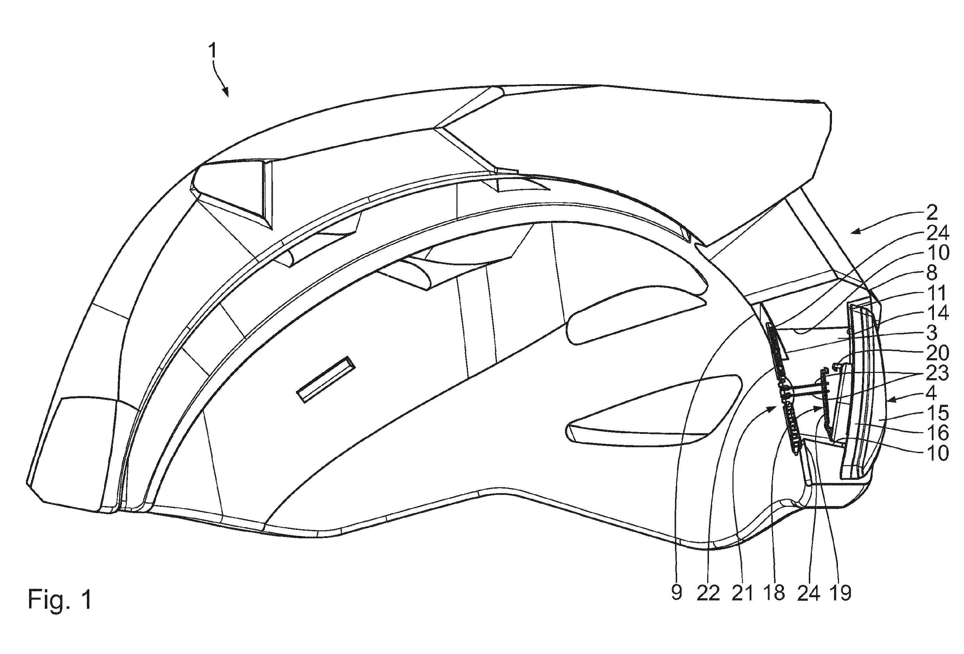

Einander entsprechende Teile sind in den Fig. 1 bis 7 mit denselben Bezugszeichen versehen. Auch Einzelheiten der im Folgenden näher erläuterten Ausführungsbeispiele können für sich genommen eine Erfindung darstellen oder Teil eines eigenen Erfindungsgegenstands sein.

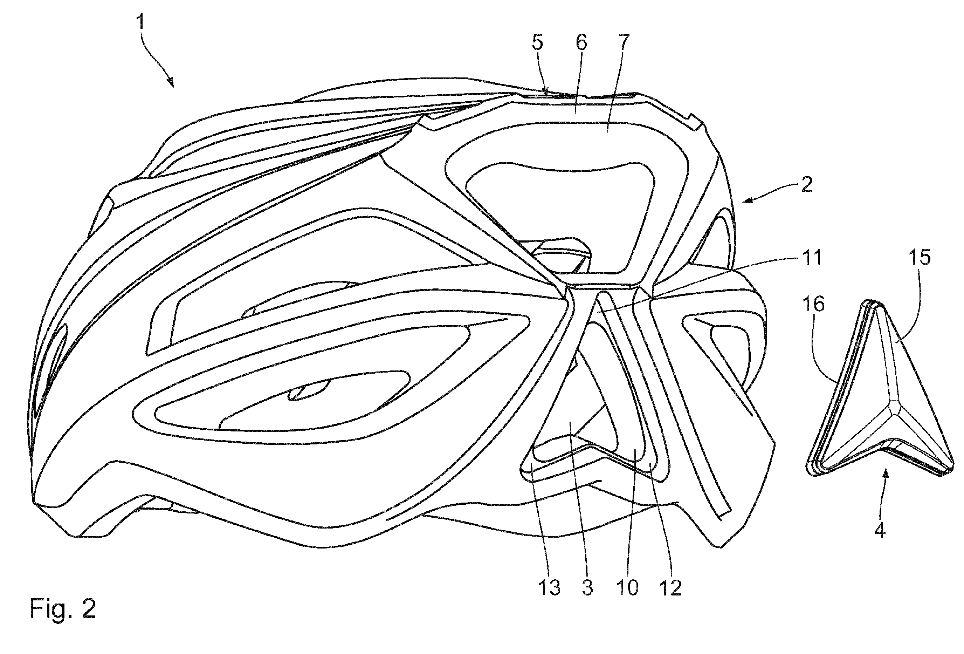

In Fig. 1 und 2 ist ein Ausführungsbeispiel eines Schutzhelms 1 mit einem an einer Helmrückseite 2 in eine Öffnung 3 lösbar eingesetzten Rücklicht 4 gezeigt. Der Schutzhelm 1 ist bei dem gezeigten Ausführungsbeispiel ein Sturzhelm in Form eines Fahrradhelms. Er weist eine mehrteilige Helmschale 5 auf, die sich aus einer harten, dünnen Außenschale 6 sowie einer demgegenüber weicheren und dickeren stoßdämpfenden EPS-Innenschale 7 zusammensetzt.

Die Öffnung 3 durchdringt - wie weitere nicht näher bezeichnete Belüftungsöffnungen - die mehrteilige Helmschale 5 vollständig. Die Öffnung 3 erstreckt sich also von einer Helmaußenseite 8 bis zu einer Helminnenseite 9. Bei nicht eingesetztem Rücklicht 4 wirkt auch die Öffnung 3 wie die anderen Öffnungen be- oder entlüftend. Die Öffnung 3 hat einen in etwa senkrecht zur Richtung der Helmschalendicke orientierten in etwa dreieckigen Öffnungsquerschnitt und eine Öffnungsinnenwand 10, die einen Aufnahmeraum zur Aufnahme des Rücklichts 4 umschließt. Die Öffnungsinnenwand 10 hat an den Ecken des dreieckigen Öffnungsquerschnitts jeweils einen Vorsprung 11, 12 bzw. 13, auf denen das Rücklicht 4 mit einer Rückwand 14 aufliegt. Die Vorsprünge 11, 12 und 13 sind insbesondere innerhalb der EPS-Innenschale 7 angeordnet. Insbesondere aufgrund der Vorsprünge 11, 12 und 13 ist der Öffnungsquerschnitt der Öffnung 3 an der Helmaußenseite 8 größer als an der Helminnenseite 9. Auch ansonsten kann sich die Öffnung 3 zur Helminnenseite 9 hin aber vorzugsweise verjüngen.

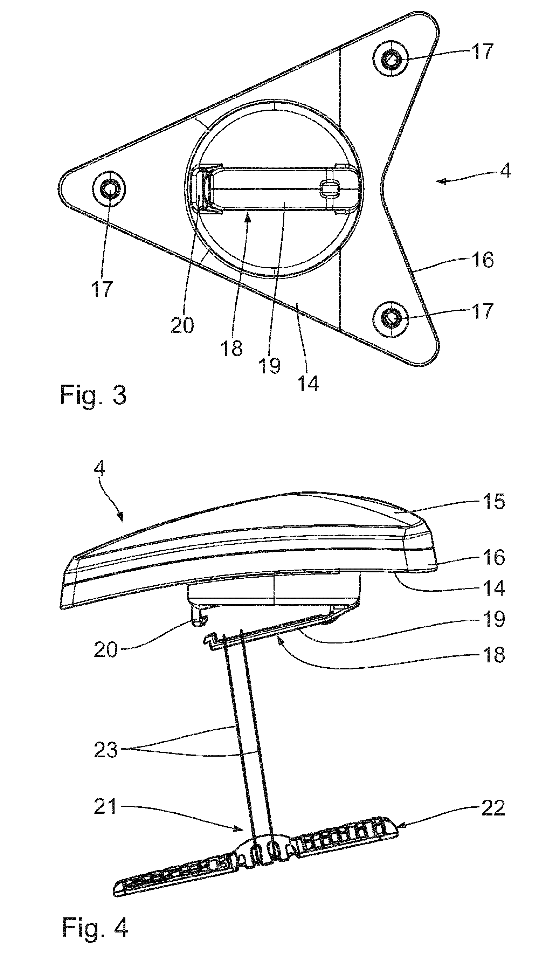

Das in Fig. 3 und 4 näher gezeigte Rücklicht 4 ist ein Leuchtelement, das bei dem gezeigten Ausführungsbeispiel als Leuchtmittel mindestens eine Leuchtdiode (LED) umfasst. Das Rücklicht 4 hat eine ebenfalls etwa dreieckige Grundfläche und ist in seiner seitlichen Außenkontur an die in etwa dreieckige Querschnittsfläche der Öffnung 3 angepasst. Grundsätzlich kann für die Grundfläche des Rücklichts 4 und für die Querschnittsfläche der Öffnung 3 auch eine andere Flächenform als die bei dem gezeigten Ausfühningsbeispiel vorgesehene Dreiecksform, beispielsweise eine runde, ovale, vier- oder mehreckige Form, vorgesehen sein.

Das Rücklicht 4 hat eine lichtdurchlässige und gegebenenfalls rot eingefärbte Vorderseitenabdeckung 15 sowie einen Gehäuseboden 16, der an seiner Bodenunterseite auch die Rückwand 14 des Rücklichts 4 insgesamt bildet. Der Gehäuseboden 16 und die Vorderseitenabdeckung 15 bilden gemeinsam ein Gehäuse des Rücklichts 4. In diesem Gehäuse ist auch eine elektrische Energieversorgung zum Betrieb der mindestens einen Leuchtdiode angeordnet. Die Energieversorgung ist bei dem gezeigten Ausführungsbeispiel eine Knopfzellen-Batterie. Sie kann aber grundsätzlich auch anders ausgestaltet sein, beispielsweise als wieder aufladbarer Akku. Der Gehäuseboden 16 und die Vorderseitenabdeckung 15 sind mittels Schrauben 17 (siehe Fig. 3) miteinander verbunden. An der Rückwand 14 ist zentral und abseits von den Bereichen, die auf den Vorsprüngen 11, 12 und 13 der Öffnungsinnenwand 10 aufliegen, eine Haltespange 18 einstückig angeformt. Die Haltespange 18 hat einen Haltearm 19 und einen Raststeg 20, unter dessen Rastnase der Haltearm 19 mit einem korrespondierenden Rastvorsprung einrastbar ist.

Die Haltespange 18 dient zur Verbindung des Rücklichts 14 mit einem Haltemechanismus 21, der einen Haltestift 22 und mindestens einen elastischen Gummiring 23 umfasst. Im in Fig. 1 gezeigten montierten Zustand stützt sich der Haltestift 22 auf der Helminnenseite 9 an einem die Öffnung 3 umgebenden Öffnungsrand 24, der ein Bestandteil der Helmschale 5 und insbesondere der EPS-Innenschale 7, ist, ab. Der mindestens eine Gummiring 23 verbindet den am Öffnungsrand 24 abgestützten Haltestift 22 mit der Haltespange 18 und damit auch mit dem Rücklicht 4 insgesamt. Im montierten Zustand ist der Gummiring 23 gespannt und übt aufgrund seiner elastischen Kraftwirkung eine Zugkraft auf das Rücklicht 4 aus, so dass das Rücklicht 4 in Richtung zur Helminnenseite 9 in die Öffnung 3 hineingezogen wird, bis seine Rückwand 14 auf den Vorsprüngen 11, 12 und 13 der Öffnungsinnenwand 10 aufliegt. Aufgrund der Zugkraft des gespannten Gummirings 23 wird das Rücklicht 4 in dieser Position gehalten.

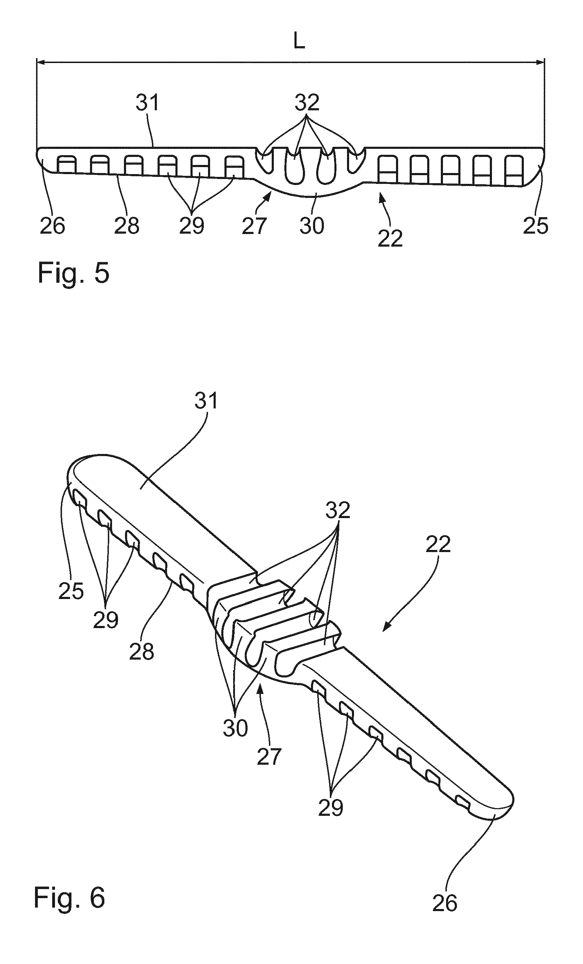

In Fig. 5 und 6 ist der Haltestift 22 näher gezeigt. Er hat eine Länge L, die größer ist, als jede beliebige Öffnungsweite der Öffnung 3 an der Helminnenseite 9. Der Haltestift 22 hat ein dickeres Ende 25 und ein schmäleres Ende 26. Er verjüngt sich ausgehend von dem dickeren Ende 25 abgesehen von einem Zentralbereich 27 kontinuierlich. Sein Querschnitt senkrecht zur Längsrichtung nimmt beginnend vom dickeren Ende 25 und abgesehen von dem Zentralbereich 27 sowie von an einer Stiftoberseite 28 vorgesehenen Ausnehmungen 29 kontinuierlich ab. Die Ausnehmungen 29 dienen der Material- und Gewichtseinsparung. Im Zentralbereich 27 hat der Haltestift 22 eine Verstärkung, die Vorwölbungen 30 an, abgesehen von einer Stiftunterseite 31, insbesondere allen anderen Stiftlängsseiten des Haltestifts 22 umfasst. Die durch die Vorwölbungen 30 erzielte Verstärkung im Zentralbereich 27 dient zur Vergrößerung der Auflagefläche für den Gummiring 23 und damit zur Verbesserung des Sitzes des Gummirings 23 am Haltestift 22. Darüber hinaus ist die Verstärkung des Zentralbereichs 27 mittels der Vorwölbungen 30 wegen der dort auftretenden besonders starken mechanischen Belastung sehr vorteilhaft. Im Zentralbereich 27 sind weiterhin Führungsnuten 32 zur Aufnahme des Gummirings 23 vorgesehen. Die Führungsnuten 32 verlaufen senkrecht zur Längsrichtung des Haltestifts 22. Es sind mehrere Führungsnuten 32 vorgesehen, um den sicheren Sitz des Gummirings 23 am Haltestift 22 zu gewährleisten, insbesondere auch dann, wenn der Gummiring 23 verrutscht, beispielsweise während des Durchführens des Haltestifts 22 durch die Öffnung 3. Der verrutschende Gummiring 23 verlässt zwar u.U. die ursprünglich vorgesehene, z.B. zentrale, Führungsnut, wird dann aber unmittelbar wieder in einer der anderen Führungsnuten 23 aufgenommen, so dass ein sicherer Sitz am Haltestift 23 gewährleistet bleibt.

Der Haltestift 22 liegt im montierten Zustand mit seiner Stiftoberseite 28 an dem Öffnungsrand 24 an, so dass die Vorwölbung 30 sich zumindest auch teilweise in die Öffnung 3 hinein erstreckt.

Im Folgenden wird das Einsetzen des Rücklichts 4 in die Öffnung 3 und das Montieren des Haltemechanismus 21 beschrieben.

Zunächst wird die Haltespange 18 geöffnet und der Gummiring 23 über den Haltearm 19 geschoben. Nach dem Verschließen der Haltespange 18 wird das Rücklicht 4 von oben, also ausgehend von der Helmaußenseite 8, in die Öffnung 3 eingesetzt, bis die Rückwand 4 auf den Vorsprüngen 11, 12 und 13 aufliegt. Dann wird an der Helminnenseite 9 der Gummiring 23 so weit gedehnt, bis er über den inneren Öffnungsrand 24 aus der Öffnung 3 hervorsteht. Der Haltestift 22 wird von der Seite so weit durch den gedehnten Gummiring 23 hindurchgeschoben, bis der Gummiring 23 in einer der Führungsnuten 32 zu liegen kommt. Die elastische Rückzugskraft des gespannten Gummirings 23 zieht den Haltestift 22 dann an den Öffnungsrand 24, so dass der Haltestift 22 an der Helminnenseite 9 abgestützt ist. Es bleiben eine Restdehnung und damit eine Restspannung im Gummiring 23, wodurch das Rücklicht 4 nach innen in die Öffnung 3 gezogen, gegen die Öffnungsinnenwand 10, insbesondere gegen die Vorsprünge 11, 12 und 13, gedrückt und sicher am Schutzhelm 1 innerhalb der Öffnung 3 gehalten wird. Aufgrund der elastischen Kraftwirkung des Gummirings 23 ist eine Spannbefestigung des Rücklichts 4 am Schutzhelm 1 innerhalb der Öffnung 3 realisiert.

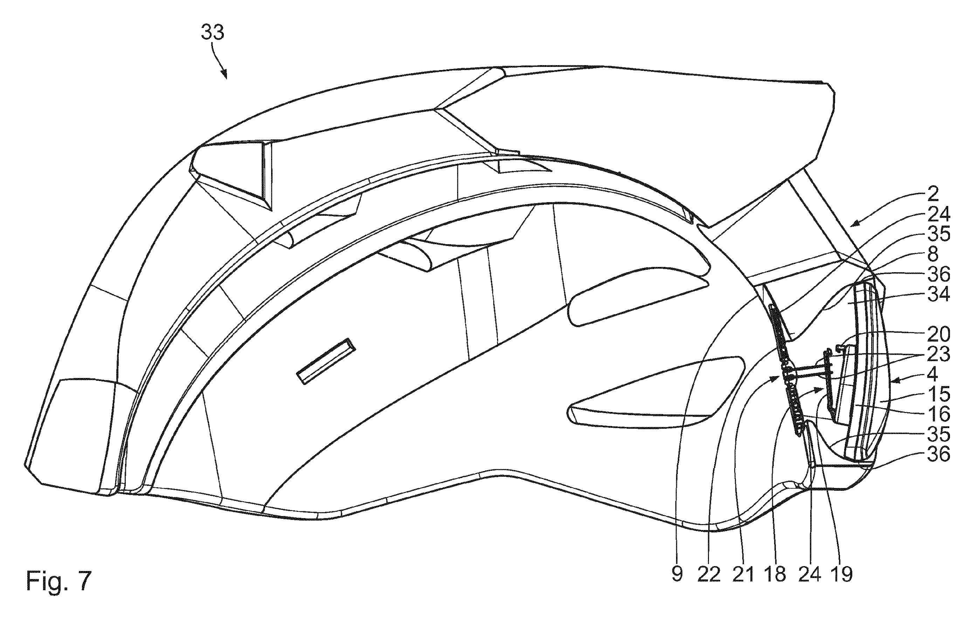

In Fig. 7 ist ein anderes Ausführungsbeispiel eines Schutzhelms 33 gezeigt, der ähnlich zu dem Schutzhelm 1 aufgebaut ist. Auch der Schutzhelm 33 weist an der Helmrückseite 2 das in eine Öffnung 34 lösbar eingesetzte Rücklicht 4 auf. Ein Unterschied besteht in der Ausgestaltung der Öffnung 34. Deren Öffnungsinnenwand 35 weist im Gegensatz zu der Öffnungsinnenwand 10 des Schutzhelms 1 keine Vorsprünge 11, 12 und 13 auf. Stattdessen nimmt der Öffnungsquerschnitt ausgehend vom der Helmaußenseite 8 bis zur Helminnenseite 9 kontinuierlich ab. Der Kontakt zwischen dem in die Öffnung 34 eingesetzten Rücklicht 4 und der Öffnungsinnenwand 35 erfolgt hier insbesondere über eine Seitenwand 36 des Rücklichts 4. Aufgrund der sich nach innen verjüngenden Öffnung 34 ergibt sich für das Rücklicht 4 auch ohne die Vorsprünge 11, 12 und 13 eine definierte und sichere Sitzposition innerhalb der Öffnung 34.

Im Übrigen unterscheidet sich der Schutzhelm 33 nicht von dem Schutzhelm 1. Insbesondere ist die gleiche Spannbefestigung mittels des Haltemechanismus 21 vorgesehen. Insofern wird hierzu auf die Ausführungen zum Schutzhelm 1 verwiesen.

Die beiden Ausführungsbeispiele der Schutzhelme 1 und 33 zeichnen sich durch eine sehr einfache und sichere Befestigung des Rücklichts 4 in der Öffnung 3 bzw. 34 mittels einer elastischen Zugkraft aus. Der dafür vorgesehene Haltemechanismus 21 lässt sich mit einfachen Mitteln realisieren. Das Rücklicht 4 wird bei beiden Ausführungsbeispielen praktisch vollständig innerhalb der Öffnung 3 bzw. 34 gehalten. Das Rücklicht 4 steht - wenn überhaupt - nur geringfügig über den Rand der Öffnung 3 bzw. 34 an der Helmaußenseite 8 vor. Dies ist günstig im Hinblick auf die Helmsicherheit. Dem gleichen Zweck dient der Haltemechanismus 21, der zuverlässig ein unbeabsichtigtes Lösen des Rücklichts 4 aus der Öffnung 3 bzw. 34 verhindert.

## Patentansprüche

1. Schutzhelm mit mindestens einem lösbar eingesetzten Leuchtelement (4) wobei
a) eine Helmschale (5) mit einer Helmaußenseite (8) und einer Helminnenseite (9) vorgesehen ist, und die Helmschale (5) mindestens eine Öffnung (3; 34) aufweist, die die Helmschale (5) vollständig durchdringt, und die eine Öffnungsinnenwand (10; 35) sowie einen Öffnungsquerschnitt hat, wobei der Öffnungsquerschnitt an der Helmaußenseite (8) größer ist als an der Helminnenseite (9),
b) das Leuchtelement (4) eine Leuchtenseitenwand (36) sowie eine Leuchtenrückwand (14) aufweist und von der Helmaußenseite (8) aus in die Öffnung (3; 34) eingesetzt ist, wobei mindestens die Leuchtenseitenwand (36) oder mindestens die Leuchtenrückwand (14) mit der Öffnungsinnenwand (10; 35) in Kontakt steht, und
c) ein sich an der Helminnenseite (9) abstützender Leuchtenhaltemechanismus (21) vorgesehen ist,
**dadurch gekennzeichnet dass** der Leuchtenhaltemachanismus lösbar mit dem Leuchtelement (4) verbunden ist und auf das Leuchtelement (4) eine Zugkraft ausübt, so dass das Leuchtelement (4) in die Öffnung (3; 34) hineingezogen wird, und
- ein sich an der Helminnenseite (9) abstützendes Halteelement (22) und ein das Halteelement (22) mit dem Leuchtelement (4) verbindendes Verbindungselement (23) enthält, wobei
- das Halteelement (22) steif und das Verbindungselement (23) elastisch oder federnd ist, und
- das Verbindungselement (23) als eine Schlaufe oder als eine Feder ausgebildet ist.

2. Schutzhelm nach Anspruch 1, **dadurch gekennzeichnet, dass** die Öffnungsinnenwand (10) mindestens einen Vorsprung (11, 12, 13) aufweist, auf dem das Leuchtelement (4) aufliegt.

3. Schutzhelm nach Anspruch 1, **dadurch gekennzeichnet, dass** sich der Öffnungsquerschnitt zur Helminnenseite (9) hin im Wesentlichen kontinuierlich verringert, und das Leuchtelement (4) an der Öffnungsinnenwand (35) anliegt.

4. Schutzhelm nach einem der vorhergehenden Ansprüche, **dadurch gekennzeichnet, dass** eine Kontur der Leuchtenseitenwand (36) an eine Kontur der Öffnungsinnenwand (10; 35) angepasst ist.

5. Schutzhelm nach einem der vorhergehenden Ansprüche, **dadurch gekennzeichnet, dass** das Leuchtelement (4) an der Leuchtenrückwand (14) eine Haltespange (18) zur Verbindung des Leuchtelements (4) mit dem Leuchtenhaltemechanismus (21) hat.

6. Schutzhelm nach einem der vorhergehenden Ansprüche, **dadurch gekennzeichnet, dass** der Leuchtenhaltemechanismus (21) mindestens ein elastisches oder federndes Element (23) enthält.

7. Schutzhelm nach einem der vorhergehenden Ansprüche, **dadurch gekennzeichnet, dass** das Verbindungselement als als ein Gummiring (23) ausgebildet ist.

8. Schutzhelm nach einem der vorhergehenden Ansprüche, **dadurch gekennzeichnet, dass** das Halteelement als ein Haltestift (22) ausgebildet ist, dessen Länge größer ist als eine Öffnungsweite der Öffnung (3; 34) an der Helminnenseite (9).

9. Schutzhelm nach Anspruch 8, **dadurch gekennzeichnet, dass** sich ein Querschnitt des Haltestifts (22) in dessen Längsrichtung gesehen verkleinert.

10. Schutzhelm nach Anspruch 8 oder 9, **dadurch gekennzeichnet, dass** der Haltestift (22) in einem zentralen Abschnitt (27) eine Verstärkung (30) aufweist.

11. Schutzhelm nach einem der Ansprüche 8 bis 10, **dadurch gekennzeichnet, dass** der Haltestift (22) in einem zentralen Abschnitt (27) mindestens eine Führung (32) für das Verbindungselement (23) aufweist.

## Claims

1. Protective helmet with at least one detachable light element (4) wherein
a) a helmet shell (5) with an outer helmet side (8) and an inner helmet side (9) is provided and the helmet shell (5) has at least one opening (3; 34), through which the helmet shell (5) passes fully and which has an opening inner wall (10; 35) and an opening cross section, wherein the opening cross section is greater on the outer helmet side (8) than on the inner helmet side (9),
b) the light element (4) comprises a light side wall (36) and a light rear wall (14) and is inserted from the outer helmet side (8) into the opening (3; 34), wherein at least the light side wall (36) or at least the light rear wall (14) is in contact with the opening inner wall (10; 35), and
c) a light holding mechanism (21) supported on the inner helmet side (9) is provided,
**characterised in that** the light holding mechanism
- is connected detachably to the light element (4) and exerts a traction force on the light element (4), so that the light element (4) is pulled into the opening (3; 34), and
- contains a holding element (22) supported on the inner helmet side (9) and a connecting element (23) connecting the holding element (22) to the light element (4), wherein
- the holding element (22) is rigid and the connecting element (23) is elastic or resilient, and
- the connecting element (23) is configured as a loop or as a spring.

2. Protective helmet according to claim 1, **characterised in that** the opening inner wall (10) comprises at least one projection (11, 12, 13), on which the light element (4) sits.

3. Protective helmet according to claim 1, **characterised in that** the opening cross section decreases substantially continually towards the inner helmet side (9), and the light element (4) bears on the opening inner wall (35).

4. Protective helmet according to one of the preceding claims, **characterised in that** a contour of the light side wall (36) is adjusted to a contour of the opening inner wall (10; 35).

5. Protective helmet according to one of the preceding claims, **characterised in that** the light element (4) on the light rear wall (14) has a holding clasp (18) for connecting the light element (4) to the light holding mechanism (21).

6. Protective helmet according to one of the preceding claims, **characterised in that** the light holding mechanism (21) contains at least one elastic or resilient element (23).

7. Protective helmet according to one of the preceding claims, **characterised in that** the connecting element is configured as a rubber ring (23).

8. Protective helmet according to one of the preceding claims, **characterised in that** the holding element is configured as a holding pin (22), the length of which is greater than an opening width of the opening (3; 34) on the inner helmet side (9).

9. Protective helmet according to claim 8, **characterised in that** a cross section of the holding pin (22) decreases as viewed in its longitudinal direction.

10. Protective helmet according to claim 8 or 9, **characterised in that** the holding pin (22) comprises a reinforcement (30) in a central section (27).

11. Protective helmet according to any one of claims 8 to 10, **characterised in that** the holding pin (22) comprises at least one guide (32) for the connecting element (23) in a central section (27).

## Revendications

1. Casque de protection avec au moins un élément d'éclairage (4) implanté amovible, dans lequel
a) une coque de casque (5), avec une face externe de casque (8) et une face interne de casque (9), est prévue, et la coque de casque (5) présente au moins une ouverture (3 ; 34) qui parcourt totalement la coque de casque (5) et qui possède une paroi interne d'ouverture (10 ; 35) ainsi qu'une section transversale d'ouverture, la section transversale d'ouverture étant plus grande sur la face externe de casque (8) que sur la face interne de casque (9),
b) l'élément d'éclairage (4) présente une paroi latérale d'éclairage (36) ainsi qu'une paroi arrière d'éclairage (14) et est inséré dans l'ouverture (3 ; 34) à partir de la face externe de casque (8), au moins la paroi latérale d'éclairage (36) ou au moins la paroi arrière d'éclairage (14) étant en contact avec la paroi interne d'ouverture (10 ; 35), et
c) un mécanisme de retenue d'éclairage (21), s'appuyant sur la face interne de casque (9), est prévu,
**caractérisé en ce que** le mécanisme de retenue d'éclairage est relié de manière amovible avec l'élément d'éclairage (4) et exerce une force de traction sur l'élément d'éclairage (4), de sorte que l'élément d'éclairage (4) est tiré vers l'intérieur de l'ouverture (3 ; 34), et
- contient un élément de retenue (22), s'appuyant sur la face interne de casque (9), et un élément de liaison (23), reliant l'élément de retenue (22) avec l'élément d'éclairage (4), où
- l'élément de retenue (22) est rigide et l'élément de liaison (23) est élastique ou amortisseur, et
- l'élément de liaison (23) est conçu sous la forme d'une bride ou d'un ressort.

2. Casque de protection selon la revendication 1, **caractérisé en ce que** la paroi interne d'ouverture (10) présente au moins une avancée (11, 12, 13) sur laquelle repose l'élément d'éclairage (4).

3. Casque de protection selon la revendication 1, **caractérisé en ce que** la section transversale de l'ouverture s'amenuise dans l'ensemble de manière continue vers la face interne de casque (9), et l'élément d'éclairage (4) est adjacent à la paroi interne d'ouverture (35).

4. Casque de protection selon l'une des revendications précédentes, **caractérisé en ce qu'**une bordure de la paroi latérale d'éclairage (36) est ajustée à une bordure de la paroi interne d'ouverture (10 ; 35).

5. Casque de protection selon l'une des revendications précédentes, **caractérisé en ce que** l'élément d'éclairage (4) possède une barrette de retenue (18) sur la paroi arrière d'éclairage (14) pour la liaison de l'élément d'éclairage (4) avec le mécanisme de retenue d'éclairage (21).

6. Casque de protection selon l'une des revendications précédentes, **caractérisé en ce que** le mécanisme de retenue d'éclairage (21) contient au moins un élément (23) élastique ou amortisseur.

7. Casque de protection selon l'une des revendications précédentes, **caractérisé en ce que** l'élément de liaison est conçu sous la forme d'un anneau en caoutchouc (23).

8. Casque de protection selon l'une des revendications précédentes, **caractérisé en ce que** l'élément de retenue est conçu sous la forme d'une goupille de retenue (22), dont la longueur est supérieure à la taille d'ouverture de l'ouverture (3 ; 34) sur la face interne de casque (9).

9. Casque de protection selon la revendication 8, **caractérisé en ce qu'**une section transversale de la goupille de retenue (22) s'amenuise, vu dans sa direction longitudinale.

10. Casque de protection selon les revendications 8 ou 9, **caractérisé en ce que** la goupille de retenue (22) présente un renfort (30) dans une portion centrale (27).

11. Casque de protection selon l'une des revendications 8 à 10, **caractérisé en ce que** la goupille de retenue (22) présente au moins un guide (32) pour l'élément de liaison (23) dans une portion centrale (27).
